# EUROPÄISCHE PATENTANMELDUNG

(11) **EP 1 281 892 A2**
(43) Veröffentlichungstag der Anmeldung: **05.02.2003**
(21) Anmeldenummer: 02016719.3
(22) Anmeldetag: 26.07.2002
(51) Int. Cl.: F16H 3/091

(54) **Fahrzeuggetriebe**

(30) Priorität: 31.07.2001 DE 10137356
(71) Anmelder: ZF FRIEDRICHSHAFEN AG, 88038 Friedrichshafen (DE)
(72) Erfinder: Wafzig, Jürgen, 88097 Eriskirch (DE)

(57) **Zusammenfassung**

Die Erfindung geht von einem Fahrzeuggetriebe mit einer Antriebswelle (10), einer koaxialen Abtriebswelle (11) und einer Vorgelegewelle (12, 13) aus, die achsparallel zu den genannten Wellen (10, 11) angeordnet ist und triebmäßig über Radsätze (I bis V und W) mit diesen durch Schaltkupplungen (a bis e, g, h) verbunden werden kann, wobei einige Radsätze (I, II, III, W) eine Hauptgetriebegruppe (29) und zwei Radsätze (IV, V) eine nachgeschaltete Bereichsgruppe (30) bilden. Es wird vorgeschlagen, dass zwischen der Antriebswelle (10) und der Abtriebswelle (11) eine koaxiale Zwischenwelle (14) angeordnet ist, die durch eine erste Schaltkupplung (a) mit der Antriebswelle (10) und durch eine sechste Schaltkupplung (f) mit der Abtriebswelle (11) koppelbar ist und dass die Vorgelegewelle (12, 13) aus einer ersten Vorgelegewelle (12) und einer koaxial zu dieser angeordneten zweiten Vorgelegewelle (13) besteht, die mit der ersten Vorgelegewelle (12) durch eine zweite Schaltkupplung (b) koppelbar ist.

## Beschreibung

Die Erfindung betrifft ein Fahrzeuggetriebe nach dem Oberbegriff von Anspruch 1.

Fahrzeuggetriebe in Vorgelegebauweise sind in konstruktiver Hinsicht und ganz besonders mit Rücksicht auf den Preis eine sehr günstige Getriebelösung. Sie besitzen in der Regel eine Antriebswelle und eine Abtriebswelle sowie eine zu diesen parallel angeordnete Vorgelegewelle. Der Kraftfluß fließt über einen Radsatz von der Antriebswelle auf die Vorgelegewelle und von dort über einen weiteren Radsatz auf die Abtriebswelle. Einer der Radsätze, der bei allen Gängen beteiligt ist und Konstante genannt wird, besitzt zwei Festräder, die miteinander kämmen und jeweils auf der Vorgelegewelle bzw. der Antriebswelle oder der Abtriebswelle sitzen. Der andere Radsatz besitzt ein Losrad und ein Festrad. Er ist jeweils einem Gang zugeordnet. Der Radsatz für den Rückwärtsgang, auch Wenderadsatz genannt, besitzt außerdem ein Zwischenrad, das einerseits mit dem Losrad und andererseits mit dem Festrad kämmt und so die Drehrichtung der Abtriebswelle gegenüber der Antriebswelle umkehrt.

Zum direkten Durchtrieb durch das Getriebe, was einer Übersetzung von eins entspricht, wird die Antriebswelle über eine Schaltkupplung direkt mit der koaxial angeordneten Abtriebswelle gekoppelt, ohne dass Momente über Radsätze übertragen werden. So benötigt ein Fahrzeuggetriebe mit sechs Vorwärtsgängen, von denen einer als direkter Gang ausgelegt ist, und mit einem Rückwärtsgang sechs Radsätze und sieben Schaltkupplungen. Die Schaltkupplungen sind im Fahrzeuggetriebe in der Regel so angeordnet, dass sie durch mechanische Betätigungselemente vom Fahrer nacheinander betätigt werden können, indem er einen Schalthebel in zwei senkrecht zueinander angeordneten Bewegungsebenen betätigt. Durch die Bewegung in der ersten Bewegungsebene werden zwei Gänge einer Schaltgasse gewählt, und durch die Bewegung in der zweiten Bewegungsrichtung wird einer der gewählten Gänge geschaltet.

Um einen Fahrzeugmotor während der Fahrt im optimalen Betriebsbereich betreiben zu können, sind Getriebe mit vielen Gängen wünschenswert, wobei die Stufensprünge zwischen den einzelnen Gängen vom höchsten Gang zum niedrigsten Gang progressiv ansteigen sollen. Dadurch wird erreicht, dass der Fahrer durch eine feine Abstufung die Drehzahl des Fahrzeugmotors der Fahrzeuggeschwindigkeit gut anpassen kann. Ferner soll der gesamte Übersetzungsbereich des Fahrzeuggetriebes zwischen dem ersten und höchsten Gang groß sein, wobei das Verhältnis vom Übersetzungsbereich zur Anzahl der Gänge relativ groß sein und der Bauaufwand gering gehalten werden soll. Solche Fahrzeuggetriebe lassen sich mit einem vertretbaren Aufwand mit bis zu sechs Vorwärtsgängen ausführen.

Der Bauaufwand eines Fahrzeuggetriebes kann dadurch verringert werden, dass einige Radsätze mehrfach genutzt werden, indem sie zum Bilden unterschiedlicher Gänge verwendet werden. Beispielsweise wird bei Gruppengetrieben einer Hauptgetriebegruppe eine Zusatzgetriebegruppe, bestehend aus zwei oder mehreren Radsätzen, vor- und/oder nachgeschaltet, so dass sich aus der Kombination der Radsätze der Zusatzgetriebegruppen mit den Radsätzen der Hauptgetriebegruppe die Anzahl der Gänge des Fahrzeuggetriebes aus dem Produkt der Anzahl der Gänge der einzelnen Getriebegruppen ergibt. Die Stufensprünge zwischen den Radsätzen der Zusatzgetriebegruppe werden auf die Stufensprünge zwischen den Radsätzen der Hauptgetriebegruppe so abgestimmt, dass sich insgesamt eine brauchbare Abstufung des Fahrzeuggetriebes ergibt. Auf Grund des Gruppenaufbaus des Fahrzeuggetriebes ist im allgemeinen nur eine geometrische und keine progressive Abstufung des gesamten Übersetzungsbereichs möglich, da durch die Mehrfachnutzung der Radsätze der Hauptgetriebegruppe die Stufensprünge der Hauptgetriebegruppe mehrfach wiederkehren.

Die Zusatzgetriebegruppe wird in der Regel so ausgelegt, dass sie als so genannte Splitgetriebegruppe die Stufensprünge der Hauptgetriebegruppe unterteilt oder als so genannte Bereichsgetriebegruppe den Übersetzungsbereich der Hauptgetriebegruppe nach oben oder unten erweitert. Während die Hauptgetriebegruppe in der Regel so ausgelegt wird, dass sie mit mechanischen Mitteln durch Handkraft geschaltet werden kann, wird die Zusatzgetriebegruppe durch Fremdkraft, z.B. elektrisch, hydraulisch oder pneumatisch betätigt. Derartige Gruppengetriebe sind aus Konstruktionsbücher Band 26, Johannes Looman, Zahnradgetriebe, 1970 Springer-Verlag Berlin, Seiten 181 ff., für Getriebe mit acht und mehr Gängen bekannt.

Aus der DE 42 05 670 C1 ist ferner ein Fahrzeuggetriebe in Vorgelegebauweise bekannt, bei dem mit fünf Radsätzen insgesamt sechs Vorwärtsgänge, einschließlich eines direkten Gangs, und ein Rückwärtsgang realisiert werden. Dies geschieht dadurch, dass ein mittlerer Radsatz mehrfach genutzt wird, indem er über Schaltkupplungen zum einen der Antriebswelle und zum anderen der Abtriebswelle zugeordnet werden kann. Die Anzahl der Gänge kann durch jeweils einen weiteren Radsatz um zwei Gänge beliebig erhöht werden. Derartige Windungsgetriebe lassen sich mit üblichen mechanischen Handschalteinrichtungen nicht mehr in einem logischen Schaltbild schalten. Allerdings ist dies kein Hindernis, da die Schaltkupplungen durch Fremdkraft betätigt werden können.

Der Erfindung liegt die Aufgabe zugrunde, mit geringem Bauaufwand ein Fahrzeuggetriebe mit neun Vorwärtsgängen und einem Rückwärtsgang zu schaffen. Sie wird gemäß der Erfindung durch die Merkmale des Anspruchs 1 gelöst. Weitere Ausgestaltungen ergeben sich aus den Unteransprüchen.

Nach der Erfindung ist bei dem Fahrzeuggetriebe zwischen der Antriebswelle und der Abtriebswelle eine koaxiale Zwischenwelle angeordnet, die durch eine erste Schaltkupplung mit der Antriebswelle und durch eine sechste Schaltkupplung mit der Abtriebswelle koppelbar ist. Die Vorgelegewelle ist unterteilt in eine erste Vorgelegewelle und in eine zweite, koaxial zur ersten angeordneten Vorgelegewelle, die mit der ersten Vorgelegewelle durch eine zweite Schaltkupplung koppelbar ist. Der erste bis dritte Radsatz und der Wenderadsatz bilden eine Hauptgetriebegruppe, wobei ein erstes Festrad des ersten Radsatzes auf der Antriebswelle sitzt und mit einem ersten Losrad auf der ersten Vorgelegewelle kämmt. Ein zweites, viertes und siebtes Festrad des zweiten und dritten Radsatzes sowie des Wenderadsatzes sitzen auf der Zwischenwelle, wobei das zweite Festrad mit einem dritten Festrad auf der ersten Vorgelegewelle kämmt, während das dritte Festrad ein zweites Losrad und das siebte Festrad über ein Zwischenrad ein fünftes Losrad auf der zweiten Vorgelegewelle antreiben. Der vierte und fünfte Radsatz, die eine nachgeschaltete Bereichsgruppe bilden, besitzen ein fünftes Festrad bzw. ein sechstes Festrad auf der Abtriebswelle, die mit Losrädern auf der zweiten Vorgelegewelle kämmen.

Mit Hilfe einer geeigneten Schaltlogik können so mit dem Bauaufwand eines Fahrzeuggetriebes in Gruppenbauweise mit sechs Gängen ein Fahrzeuggetriebe mit neun Gängen realisiert werden. Dies ermöglicht sowohl kleinere Gangsprünge wie auch eine größere Spreizung des Fahrzeuggetriebes. Durch die Mehrfachnutzung einiger Radsätze ist es möglich, mit insgesamt sechs Radsätzen und acht Schaltkupplungen auszukommen. Diese müssen allerdings durch Fremdkraft geschaltet werden, was bei der heutigen Aktuatorentechnik kein besonderer Hinderungsgrund ist. Auf Grund dieser Tatsache können solche Getriebe in einfacher Weise zu automatisch schaltenden Fahrzeuggetrieben aufgerüstet werden.

Eine vorteilhafte Schaltlogik ergibt sich, wenn zum Bilden eines ersten bis vierten Gangs der Kraftfluß über den vierten Radsatz und zum Bilden eines fünften bis achten Gangs der Kraftfluß über den fünften Radsatz geleitet wird, wobei außerdem der Kraftfluß im ersten und fünften Gang über den dritten Radsatz, im zweiten und sechsten Gang über den zweiten Radsatz, im dritten und siebten Gang über den ersten Radsatz und im vierten und achten Gang über den ersten, zweiten und dritten Radsatz geleitet wird. In einem neunten, direkten Gang ist die Antriebswelle über die Zwischenweile durch die erste und sechste Schaltkupplung mit der Abtriebswelle verbunden. Ein Rückwärtsgang wird zweckmäßigerweise je nach gewünschter Übersetzung durch den Wenderadsatz und den vierten oder fünften Radsatz gebildet, über die der Kraftfluß geleitet wird.

Mit zweckmäßigen Übersetzungen der Radsätze, z.B. für den ersten Radsatz von etwa 1,38, für den zweiten Radsatz von 2,39, für den dritten Radsatz von 3,15, für den vierten Radsatz von 0,35, für den fünften Radsatz von 1,05 und für den Wenderadsatz von 2,90, ergibt sich eine Getriebespreizung von 9,00 zwischen einer Getriebeübersetzung im ersten Gang von 9,00 bis zu einer Getriebeübersetzung von 1,00 im neunten Gang. Dabei ist der Stufensprung zwischen den einzelnen Gängen geometrisch mit einem Faktor von ca. 1,31 bzw. 1,32.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Es zeigen:
- Fig. 1: ein Getriebeschema eines erfindungsgemäßen Fahrzeuggetriebes,
- Fig. 2: eine tabellarische Zusammenstellung von Einzelübersetzungen von Radsätzen und
- Fig. 3: ein Schaltbild zu einem Fahrzeuggetriebe nach Fig. 1.

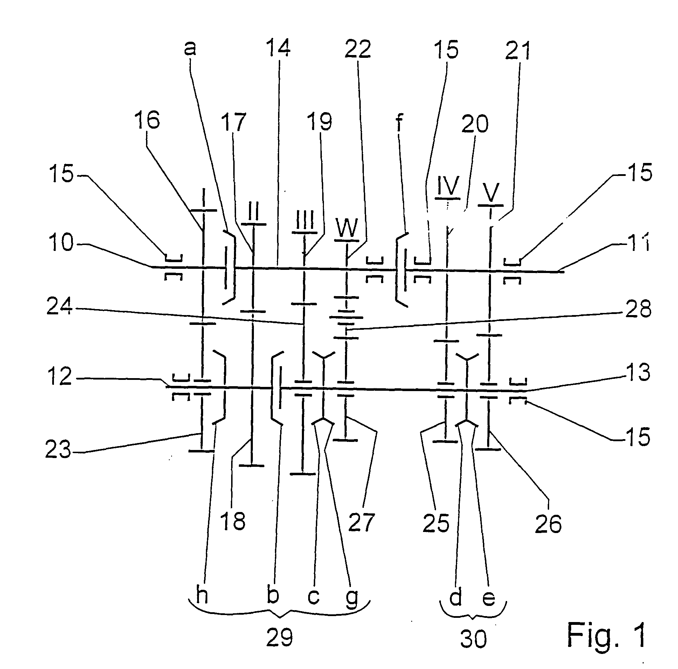

Das Fahrzeuggetriebe nach Fig. 1 besitzt eine Antriebswelle 10 und eine koaxial angeordnete Abtriebswelle 11. Koaxial zu beiden und zwischen ihnen ist einen Zwischenwelle 14 angeordnet, die durch eine erste Schaltkupplung a mit der Antriebswelle 10 und durch eine sechste Schaltkupplung f mit der Abtriebswelle 11 koppelbar ist. Parallel zur Antriebswelle 10 ist eine erste Vorgelegewelle 12 und eine koaxial zu dieser angeordnete zweite Vorgelegewelle 13 vorgesehen. Alle Wellen 10, 11, 12, 13, 14 sind durch Lager 15 in einem nicht näher dargestellten Getriebegehäuse gelagert.

Auf der Antriebswelle 10 sitzt ein erstes Festrad 16, das mit einem ersten Losrad 23 kämmt, das auf der ersten Vorgelegewelle 12 gelagert ist und mit dem ersten Festrad 16 einen ersten Radsatz I bildet. Ein zweiter Radsatz II wird durch ein zweites Festrad 17 auf der Zwischenwelle 14 und einem dritten Festrad 18 auf der ersten Vorgelegewelle 12 gebildet. Ein dritter Radsatz III besitzt ein viertes Festrad 19 auf der Zwischenwelle 14 und ein zweites Losrad 24 auf der zweiten Vorgelegewelle 13, während ein Wenderadsatz W ein siebtes Festrad 22 auf der Zwischenwelle 14 hat, das über ein Zwischenrad 28 mit einem fünften Losrad 27 auf der zweiten Vorgelegewelle 13 triebmäßig verbunden ist. Der erste bis dritte Radsatz I, II, III und der Wenderadsatz W bilden eine Hauptgetriebegruppe 29. Dieser ist eine Bereichsgetriebegruppe 30 nachgeschaltet, die einen vierten Radsatz IV und einen fünften Radsatz V umfasst. Ein fünftes Festrad 20 des vierten Radsatzes IV und ein sechstes Festrad 21 des fünften Radsatzes V sitzen auf der Abtriebswelle 11. Das fünfte Festrad 20 kämmt mit einem dritten Losrad 25, das sechste Festrad 21 mit einem vierten Losrad 26 auf der zweiten Vorgelegewelle 13.

Die erste Vorgelegewelle 12 ist mit der zweiten Vorgelegewelle 13 durch eine zweite Schaltkupplung b miteinander koppelbar. Ferner ist auf der ersten Vorgelegewelle 12 eine achte Schaltkupplung h angeordnet, durch die das erste Losrad 23 des ersten Radsatzes I mit der ersten Vorgelegewelle 12 gekoppelt werden kann. Eine dritte, vierte, fünfte und siebte Schaltkupplung c, d, e und g können jeweils die übrigen Losräder 24, 25, 26 und 27 mit der zweiten Vorgelegewelle 13 koppeln.

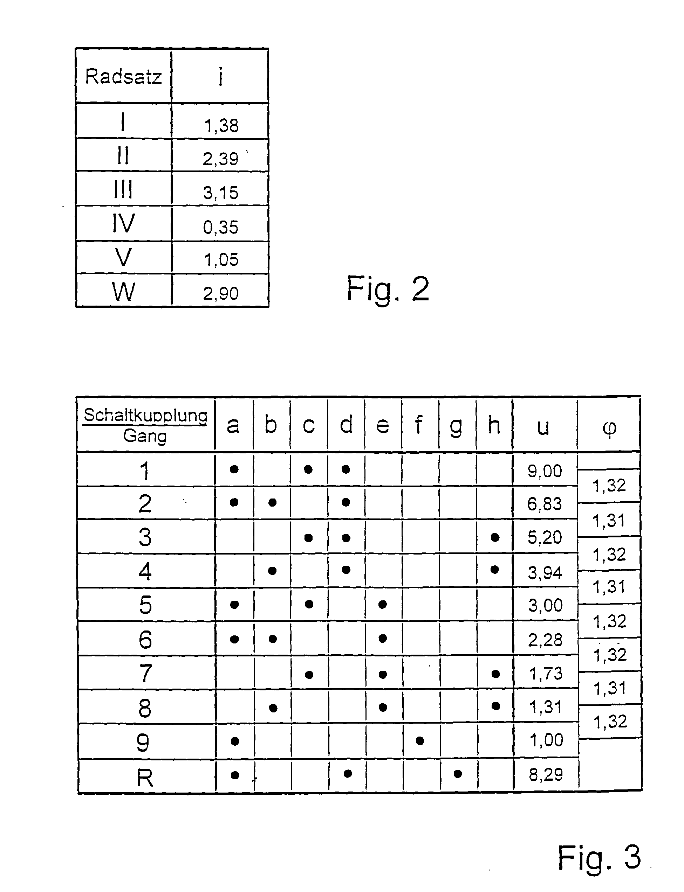

Die Radsätze I bis V und der Wenderadsatz W haben die in Fig. 2 tabellarisch aufgeführten Übersetzungen i, und zwar der erste Radsatz I eine Übersetzung von 1.38, der zweite Radsatz II von 2.39, der dritte Radsatz III von 3.15, der vierte Radsatz IV von 0.35, der fünfte Radsatz V von 1.05 und der Wenderadsatz W von 2.90, wobei die Übersetzung i definiert ist als das Verhältnis der Zähnezahl des Rades auf der ersten oder zweiten Vorgelegewelle 12, 13, dividiert durch die Zähnezahl des korrespondierenden Rades auf der Antriebs-, Zwischen- oder Abtriebswelle 10, 14, 15.

Fig. 3 zeigt eine zugeordnete Schaltlogik. In einem ersten bis vierten Gang 1, 2, 3, 4 ist die vierte Schaltkupplung d geschlossen, so dass der Kraftfluß zur Abtriebswelle 11 über den vierten Radsatz IV geleitet wird. In dem folgenden fünften bis achten Gang 5, 6, 7, 8 ist die fünfte Schaltkupplung e geschlossen, so dass der Kraftfluß nunmehr über den fünften Radsatz V zur Abtriebswelle 11 geleitet wird. Zusätzlich zu der vierten und fünften Schaltkupplung d, e, die die Bereichsgetriebegruppe 30 schalten, werden im ersten und fünften Gang 1, 5 die erste und dritte Schaltkupplung a, c betätigt, im zweiten und sechsten Gang 2, 6 die erste und zweite Schaltkupplung a, b, im dritten und siebten Gang 3, 7 die dritte und achte Schaltkupplung c, h, im vierten und achten Gang 4, 8 die zweite und achte Schaltkupplung b, h. Dadurch wird zusätzlich im ersten und fünften Gang 1, 5 der Kraftfluß über den dritten Radsatz III, im zweiten und sechsten Gang 2, 6 über den zweiten Radsatz II und im vierten und achten Gang 4, 8 über den ersten Radsatz I geleitet. Im dritten und siebten Gang 3, 7 sind die dritte Schaltkupplung c und die achte Schaltkupplung h geschlossen. Dadurch wird der Kraftfluß von der Antriebswelle 10 zunächst über den ersten Radsatz I auf die erste Vorgelegewelle 12, danach über den zweiten Radsatz II auf die Zwischenwelle 14 und von dort über den dritten Radsatz III auf die zweite Vorgelegewelle 13 geleitet. Im neunten Gang 9 sind die erste Schaltkupplung a und die sechste Schaltkupplung f geschlossen, so dass die Antriebswelle 10 über die Zwischenwelle 14 mit der Abtriebswelle 11 gekoppelt ist, ohne dass ein Drehmoment über die Radsätze I bis V und W geleitet wird. Schließlich wird im Rückwärtsgang R die erste Schaltkupplung a, die siebte Schaltkupplung g und die vierte Schaltkupplung d geschlossen, so dass der Kraftfluß über den Wenderadsatz W fließt, der auf Grund des Zwischenrads 28 die Drehrichtung der Abtriebswelle 11 gegenüber der Antriebswelle 10 umkehrt.

Die beschriebene Schaltlogik ergibt in Verbindung mit den Übersetzungen nach Fig. 2 eine Getriebeübersetzung u entsprechend der vorletzten Spalte in Fig. 3, und zwar im ersten Gang 1 von 9.00, im zweiten Gang 2 von 6.83, im dritten Gang 3 von 5.20, im vierten Gang 4 von 3.94, im fünften Gang 5 von 3.00, im sechsten Gang 6 von 2.28, im siebten Gang 7 von 1.73, im achten Gang 8 von 1.31, im neunten Gang 9 von 1.00 und im Rückwärtsgang R von 8.29. Hieraus ergibt sich im wesentlichen eine geometrische Getriebeabstufung mit einem Stufensprung ϕ für die Vorwärtsgänge 1 bis 9 von etwa 1,32 entsprechend der letzten Spalte in Fig. 3.

### Bezugszeichen

- 1: erster Gang
- 2: zweiter Gang
- 3: dritter Gang
- 4: vierter Gang
- 5: fünfter Gang
- 6: sechster Gang
- 7: siebter Gang
- 8: achter Gang
- 9: neunter Gang
- 10: Antriebswelle
- 11: Abtriebswelle
- 12: erste Vorgelegewelle
- 13: zweite Vorgelegewelle
- 14: Zwischenwelle
- 15: Lager
- 16: erstes Festrad
- 17: zweites Festrad
- 18: drittes Festrad
- 19: viertes Festrad
- 20: fünftes Festrad
- 21: sechstes Festrad
- 22: siebtes Festrad
- 23: erstes Losrad
- 24: zweites Losrad
- 25: drittes Losrad
- 26: viertes Losrad
- 27: fünftes Losrad
- 28: Zwischenrad
- 29: Hauptgetriebegruppe
- 30: Bereichsgetriebegruppe

- I: erster Radsatz
- II: zweiter Radsatz
- III: dritter Radsatz
- IV: vierter Radsatz
- V: fünfter Radsatz
- W: Wenderadsatz

- a: erste Schaltkupplung
- b: zweite Schaltkupplung
- c: dritte Schaltkupplung
- d: vierte Schaltkupplung
- e: fünfte Schaltkupplung
- f: sechste Schaltkupplung
- g: siebte Schaltkupplung
- h: achte Schaltkupplung

- u: Getriebeübersetzung
- i: Übersetzung
- ϕ: Stufensprung

## Patentansprüche

1. Fahrzeuggetriebe mit einer Antriebswelle (10), einer koaxialen Abtriebswelle (11) und einer Vorgelegewelle (12, 13), die achsparallel zu den genannten Wellen (10, 11) angeordnet ist und triebmäßig über Radsätze (I bis V und W) mit diesen durch Schaltkupplungen (a bis e, g, h) verbunden werden kann, wobei einige Radsätze (I, II, III, W) eine Hauptgetriebegruppe (29) und zwei Radsätze (IV, V) eine nachgeschaltete Bereichsgruppe (30) bilden, **dadurch gekennzeichnet, dass** zwischen der Antriebswelle (10) und der Abtriebswelle (11) eine koaxiale Zwischenwelle (14) angeordnet ist, die durch eine erste Schaltkupplung (a) mit der Antriebswelle (10) und durch eine sechste Schaltkupplung (f) mit der Abtriebswelle (11) koppelbar ist, dass die Vorgelegewelle (12, 13) aus einer ersten Vorgelegewelle (12) und einer koaxial zu dieser angeordneten zweiten Vorgelegewelle (13) besteht, die mit der ersten Vorgelegewelle (12) durch eine zweite Schaltkupplung (b) koppelbar ist, und dass ein erstes Festrad (16) eines ersten Radsatzes (I) auf der Antriebswelle (10) sitzt und mit einem ersten Losrad (23) auf der ersten Vorgelegewelle (12) kämmt, dass ein zweites, viertes und siebtes Festrad (17, 19, 22) auf der Zwischenwelle (14) sitzen, von denen das zweite Festrad (17) mit einem dritten Festrad (18) auf der ersten Vorgelegewelle (12) kämmt, während das dritte Festrad (19) ein zweites Losrad (24) und das siebte Festrad (22) über ein Zwischenrad (28) ein fünftes Losrad (27) auf der zweiten Vorgelegewelle (13) antreiben, auf der ein drittes und viertes Losrad (25, 26) gelagert sind und mit einem fünften Festrad (20) bzw. sechsten Festrad (21) auf der Abtriebswelle (11) kämmen.

2. Fahrzeuggetriebe nach Anspruch 1, **dadurch gekennzeichnet, dass** zum Bilden eines ersten bis vierten Gangs (1, 2, 3, 4) der Kraftfluß über den vierten Radsatz (IV) und zum Bilden eines fünften bis achten Gangs (5, 6, 7, 8) über den fünften Radsatz (V) geleitet wird, wobei außerdem der Kraftfluß im ersten und fünften Gang (1, 5) über den dritten Radsatz (III), im zweiten und sechsten Gang (2, 6) über den zweiten Radsatz (II), im vierten und achten Gang (4, 8) über den ersten Radsatz (I) und im dritten und siebten Gang (3, 7) über den ersten, zweiten und dritten Radsatz (I, II, III) geleitet wird, und dass in einem neunten Gang (9) die Antriebswelle (10) über die Zwischenwelle (14) durch die erste und sechste Schaltkupplung (a, f) mit der Abtriebswelle (11) verbunden ist.

3. Fahrzeuggetriebe nach Anspruch 1 oder 2, **dadurch gekennzeichnet**, ass zum Bilden eines Rückwärtsgangs (R) der Kraftfluß über einen Wenderadsatz (W) und den vierten oder fünften Radsatz (IV, V) geleitet wird.

4. Fahrzeuggetriebe nach einem der vorhergehenden Ansprüche, **dadurch gekennzeichnet**, ass der erste Radsatz (I) eine Übersetzung (i) etwa von 1.38, der zweite Radsatz (II) von 2.39, der dritte Radsatz (III) von 3.15, der vierte Radsatz (IV) von 0.35, der fünfte Radsatz von 1.05 und der Wenderadsatz (W) von 2.9 haben, wobei die Übersetzung i definiert ist als das Verhältnis der Zähnezahl des Rades auf der ersten oder zweiten Vorgelegewelle (12, 13), dividiert durch die Zähnezahl des korrespondierenden Rades auf der Antriebs-, Zwischen- oder Abtriebswelle (10, 14, 15).
